# EUROPÄISCHE PATENTSCHRIFT

(11) **EP 1 681 083 B1**
(45) Veröffentlichungstag und Bekanntmachung des Hinweises auf die Patenterteilung: **06.08.2008**
(21) Anmeldenummer: 06000566.7
(22) Anmeldetag: 12.01.2006
(51) Int. Cl.: B01D 19/04, C08L 83/04

(54) **Entschäumerzusammensetzungen**
Defoaming compositions
Compositions anti-mousse

(30) Priorität: 17.01.2005 DE 102005002163
(43) Veröffentlichungstag der Anmeldung: 19.07.2006
(73) Patentinhaber: Wacker Chemie AG, 81737 München (DE)
(72) Erfinder: Rautschek, Holger, Dr., 01612 Nünchritz (DE); Schröck, Robert, Dr., 84503 Altötting (DE)
(74) Vertreter: Budczinski, Angelika

(56) Entgegenhaltungen:
- EP-A- 0 434 060
- EP-A- 0 879 628
- DE-A1- 1 519 987
- US-A1- 2001 044 479

## Beschreibung

Die Erfindung betrifft Zusammensetzungen auf der Basis von Organopolysiloxanen, ein Verfahren zu deren Herstellung sowie deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen. Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumerformulierungen auf Basis von Siloxanen, wie sie z.B. in EP-A-0879628 beschrieben sind, werden beispielsweise nach DE-B 1519987 durch Erhitzen von hydrophiler Kieselsäure in Polydimethylsiloxanen hergestellt. Um die Wirksamkeit von derartigen Entschäumerformulierungen zu verbessern, sind viele Vorschläge gemacht worden. So werden nach US-A 2,632,736 verbesserte Entschäumerformulierungen erhalten, wenn das Polysiloxan durch Erhitzen in Gegenwart von Luftsauerstoff anvernetzt wird. Ahnlich anvernetzte oder verzweigte Polysiloxane werden beispielsweise in EP-A 163 541 oder EP-A 434 060 beschrieben. Dieser Weg hat den Nachteil, dass ein zusätzlicher kostenaufwändiger Reaktionsschritt erforderlich ist und dass die so hergestellten Entschäumerformulierungen aufgrund ihrer Viskosität oder gar Viskoelastizität meist schlecht handhabbar sind. Durch Anwendung von Katalysatoren, die die Reaktion zwischen dem Füllstoff und dem Silicon fördern, kann die Wirksamkeit der Entschäumer auf ökonomische Weise verbessert werden. DE-A 1545185 beschreibt die Herstellung von Entschäumerformulierungen mit verbesserter Wirksamkeit in alkalischen Medien in Gegenwart von sauren Katalysatoren z.B. von wasserfreien LewisSäuren, wie festem im Mörser verriebenem Aluminiumchlorid. EP-A 163 541 beschreibt die Herstellung von Entschäumerformulierungen in Gegenwart von KOH als Katalysator, wobei das Kaliumhydroxid in einem zusätzlichen aufwändigen Schritt mit Polysiloxanen zum Kaliumsiloxanolat umgesetzt wird, welches dann zur Mischung aus Polysiloxanen und Kieselsäure gegeben wird. Auch DE-A 10001945 beschreibt die Herstellung von Entschäumerformulierungen mit basischen Katalysatoren, die als Reaktionsprodukte mit Siloxanen oder direkt eingesetzt werden. Die Herstellung basischer Siloxanolate ist aufwändig, die Handhabung von wasserfreien Laugen oder Lewissäuren, wie Aluminiumchlorid, ist im Vergleich zu wässrigen Lösungen unangenehm und ebenfalls aufwändiger. Ein weiterer Nachteil der Verwendung von Katalysatoren ist, dass damit im Allgemeinen die für Anwendungen in der Pharmazie oder in Lebensmitteln erforderliche Reinheit nicht gewährleistet werden kann, da die Katalysatoren und ihre Reaktionsprodukte in der Entschäumerformulierung verbleiben.

Gegenstand der Erfindung sind Zusammensetzungen enthaltend
(A) mindestens ein Organopolysiloxan aus Einheiten der Formel

   Rₐ (R¹O)_{b}SiO_{(4-a-b)}/2 (I),

   worin
   R gleich oder verschieden sein kann und Wasserstoffatom oder einen einwertigen, SiC-gebundenen, gegebenenfalls substituierten Kohlenwasserstoffrest bedeutet,
   R¹ gleich oder verschieden sein kann und Wasserstoffatom oder einen einwertigen, gegebenenfalls substituierten Kohlenwasserstoffrest bedeutet,
   a 0, 1, 2 oder 3 ist und
   b 0, 1, 2 oder 3 ist, mit der Maßgabe, dass die Summe a+b kleiner oder gleich 3 ist, bevorzugt im Durchschnitt einen Wert von 1,5 bis 2,4, besonders bevorzugt 1,8 bis 2,3, insbesondere von 1,9 bis 2,1, aufweist, und die Organopolysiloxane aus 5 bis 50 000, bevorzugt aus 5 bis 10 000, besonders bevorzugt aus 5 bis 2000, Einheiten der Formel (I) bestehen,
(B) 0,1 bis 30 Gewichtsteile, vorzugsweise 1 bis 15 Gewichtsteile, jeweils bezogen auf 100 Gewichtsteile Komponente (A), mindestens eines Zusatzstoffes, ausgewählt aus
   (B1) Füllstoffpartikeln und/oder
   (B2) Organopolysiloxanharz aus Einheiten der Formel

      R²_{c}(R³O)_{d}SiO_{(4-c-d)/2} (II),

      worin
      R² gleich oder verschieden sein kann und Wasserstoffatom oder einen einwertigen, gegebenenfalls substituierten, SiC-gebundenen Kohlenwasserstoffrest bedeutet,
      R³ gleich oder verschieden sein kann und ein Wasserstoffatom oder einen einwertigen, gegebenenfalls substituierten Kohlenwasserstoffrest bedeutet,
      c 0, 1, 2 oder 3 ist und
      d 0, 1, 2 oder 3 ist,
      mit der Maßgabe, dass die Summe c+d kleiner oder gleich 3 ist und in weniger als 50 % aller Einheiten der Formel (II) im Organopolysiloxanharz die Summe c+d gleich 2 ist, und
(C) 0,005 bis 1,0 Gewichtsteile Wasser, bezogen auf 100 Gewichtsteile Komponente (A).

Beispiele für Reste R sind Wasserstoffatom, Alkylreste, wie Methyl-, Ethyl-, Vinyl-, Propyl-, Isopropyl-, n-Butyl-, n-Pentyl-, Cyclopentyl-, n-Hexyl-, neo-Hexyl-, n-Heptyl-, Norbornyl-, 2-Ethylhexyl-, n-Octyl-, iso-Octyl-, Dodecyl-, Tetradecyl-, Hexadecyl- oder Octadecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste, oder aromatische Reste wie Phenyl-, 2-Phenylethyl- oder 2-Phenylpropylgruppen.

Bevorzugt handelt es sich bei Rest R um gegebenenfalls substituierte Kohlenwasserstoffatome mit 1 bis 30 Kohlenstoffatomen, besonders bevorzugt um Methyl-, Ethyl-, Cyclopentyl-, n-Octyl-, Norbornyl-, Phenyl- oder 2-Phenylpropylrest, insbesondere um den Methylrest.

Bevorzugt haben im Organopolysiloxan (A) mehr als 50 % aller Reste R die Bedeutung von Methylrest.

Beispiele für Reste R¹ sind die für Rest R angegebenen Beispiele.

Bevorzugt handelt es sich bei Rest R¹ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Beispiele für die als Komponente (A) eingesetzten Organopolysiloxane sind lineare oder verzweigte Polyorganosiloxane.

Bevorzugt handelt es sich bei Komponente (A) um im Wesentlichen lineare Organopolysiloxane der Formel

R₃Si- (O-SiR₂)ₘ-O-SiR₃ (III),

wobei R die oben genannte Bedeutung besitzt und m einen Wert von 5 bis 2000 hat.

Bei den in den erfindungsgemäßen Massen als Komponente (A) eingesetzten Organopolysiloxanen der Formel (III) handelt es sich bevorzugt um reine α,ω-Trimethylsiloxydimethylpolysiloxane oder um Polysiloxane der allgemeinen Formel

R' ' (CH₃)₂Si- (O-Si (CH₃)R')ₙ-(O-Si(CH₃)₂)ₒ-(O-SiH(CH₃))ₚ-O-Si(CH₃)₂R" (IV),

wobei
R' gleiche oder verschiedene Kohlenwasserstoffreste mit mindestens 2 Kohlenstoffatomen bedeutet,
R" gleich oder verschieden sein kann und R' oder Methylrest bedeutet,
n eine ganze Zahl größer 1 ist,
o 0 oder eine ganze Zahl ist und
p 0 oder eine ganze Zahl ist,
mit der Maßgabe, dass die Summe aus n, o und p einen Wert von 5 bis 2000 hat und p/(n+o+p) kleiner als 0,1, insbesondere kleiner als 0,01, besonders bevorzugt 0, ist.

Beispiele für Rest R' sind die für Rest R angegebenen Beispiele für Kohlenwasserstoffreste mit mindestens 2 Kohlenstoffatomen, wobei Ethyl-, Cyclopentyl-, Hexyl-, Norbornyl-, Octyl-, Phenyl-, 2-Phenylethyl- oder 2-Phenylpropylreste bevorzugt sind.

Auch wenn in den Formeln (III) und (IV) nicht dargestellt, können die als Komponente (A) eingesetzten Polyorganosiloxane z.B. durch den Einbau von RSiO_{3/2}- oder SiO_{4/2}-Einheiten verzweigt sein. Diese verzweigten oder anvernetzten Siloxane weisen dann viskoelastische Eigenschaften auf. Vorzugsweise enthalten die als Komponente (A) erfindungsgemäß eingesetzten Organopolysiloxane nicht mehr als 2 mol% an RSiO_{3/2}- oder SiO_{4/2}-Einheiten.

Beispiele für die erfindungsgemäß eingesetzten Organopolysiloxane der Formel (IV) sind
Me₃Si-O- [SiMe₂-O-] ₄₀- [SiMeC₁₂H₂₅-O] ₃₆-SiMe₃,
Me₃Si-O-[SiMeC₈H₁₇-O]₂₅-[SiMe (C₂H₃ (CH₃) Ph) -O] ₂₅ -SiMe₃ und Me₃Si-O-[SiMeC₂H₅-O]₄₀-[SiMe (C₂H₃ (CH₃) Ph) -O]₁₀ -SiMe₃, wobei Me für Methylrest und Ph für Phenylrest steht.

Eine weitere bevorzugte Gruppe von Verbindungen, die als Komponente (A) eingesetzt werden kann, sind Organosiliciumverbindungen aus Bausteinen der allgemeinen Formel (I), worin R einen Methylrest und R¹ einen linearen und/oder verzweigten Kohlenwasserstoffrest mit mindestens 6 Kohlenstoffatomen bedeuten, b durchschnittlich einen Wert von 0,005 bis 0,5 hat und die Summe (a+b) durchschnittlich einen Wert von 1,9 bis 2,1 annimmt. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich. Der Anteil derartiger Verbindungen an Komponente (A) beträgt bevorzugt bis zu 15 Gewichtsteile, besonders bevorzugt 0,5 bis 5 Gewichtsteile, jeweils bezogen auf 100 Gewichtsteile der Summe aller als Komponente (A) eingesetzten Organosiliciumverbindungen.

Die erfindungsgemäß eingesetzten Organopolysiloxane (A) haben eine Viskosität von bevorzugt 10 bis 1 000 000 mPas, besonders bevorzugt von 50 bis 50 000 mPas, insbesondere von 100 bis 10 000 mPas, jeweils gemessen bei 25°C.

Diese erfindungsgemäß eingesetzten Komponenten (A) sind handelsübliche Produkte bzw. können nach in der Siliciumchemie bekannten Verfahren hergestellt werden.

Als erfindungsgemäß eingesetzten Zusatzstoff (B) kann es sich ausschließlich um Komponente (B1), ausschließlich um Komponente (B2) oder eine Mischung aus Komponenten (B1) und (B2) handeln.

Bei der Komponente (B1) handelt es sich bevorzugt um pulverförmige, vorzugsweise hydrophobe, Füllstoffe.

Vorzugsweise weist Komponente (B1) eine BET-Oberfläche von 20 bis 1 000 m²/g, eine Partikelgröße von weniger als 10 µm und eine Agglomeratgröße von weniger als 100 µm auf.

Beispiele für die Komponente (B1) sind Siliciumdioxid (Kieselsäuren), Titandioxid, Aluminiumoxid, Metallseifen, Quarzmehl, PTFE-Pulver, Fettsäureamide z.B. Ethylenbisstearamid und fein verteilte hydrophobe Polyurethane.

Vorzugsweise werden als Komponente (B1) Siliciumdioxid (Kieselsäuren), Titandioxid oder Alumiumoxid mit einer BET-Oberfläche von 20 bis 1 000 m²/g, einer Partikelgröße von weniger als 10 µm und einer Agglomeratgröße von weniger als 100 µm eingesetzt.

Besonders bevorzugt als Komponente (B1) sind Kieselsäuren, insbesondere solche mit einer BET-Oberfläche von 50 bis 800 m²/g. Diese Kieselsäuren können pyrogene oder gefällte Kieselsäuren sein. Es sind als Komponente (B1) sowohl vorbehandelte Kieselsäuren einsetzbar, also handelsübliche hydrophobe Kieselsäuren, als auch hydrophile Kieselsäuren. Beispiele für handelsübliche hydrophobe Kieselsäuren, die erfindungsgemäß eingesetzt werden können, sind HDK® H2000, eine pyrogene mit Hexamethyldisilazan behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung Sipernat® D10 bei der Degussa AG, Deutschland).

Falls als Komponente (B1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z.B. durch mehrstündiges Erhitzen der in der Komponente (A) oder in einer Komponente (A) enthaltenden Mischung dispergierten Kieselsäure auf Temperaturen von 100 bis 300°C erfolgen. Dabei kann die Reaktion durch den Zusatz von Katalysatoren, wie KOH, Mineralsäuren oder Trifluormethansulfonsäure und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Die Verwendung von Katalysatoren und spezieller Hydrophobiermittel ist insbesondere bei einer beabsichtigten Verwendung der erfindungsgemäßen Antischaummittel im Lebensmittelbereich oder in der Pharmazie bedenklich und deshalb nicht bevorzugt.

Eine weitere Möglichkeit ist die Verwendung einer Kombination von in situ hydrophobierten Kieselsäuren mit handelsüblichen hydrophoben Kieselsäuren.

Beispiele für Rest R² sind die für Rest R oben angegebenen Reste.

Bevorzugt handelt es sich bei Rest R² um gegebenenfalls substituierte Kohlenwasserstoffreste mit 1 bis 30 Kohlenstoffatomen, besonders bevorzugt um Kohlenwasserstoffreste mit 1 bis 6 Kohlenstoffatomen, insbesondere um den Methylrest.

Beispiele für Rest R³ sind die für den Rest R¹ angegebenen Reste.

Bevorzugt handelt es sich bei Rest R³ um Wasserstoffatom oder um Kohlenwasserstoffreste mit 1 bis 4 Kohlenstoffatomen, insbesondere um Wasserstoffatom, Methyl- oder Ethylreste.

Bevorzugt ist der Wert für c gleich 3 oder 0.

Bei der erfindungsgemäß gegebenenfalls eingesetzten Komponente (B2) handelt es sich bevorzugt um Siliconharze aus Einheiten der Formel (II), bei denen in weniger als 30%, bevorzugt in weniger als 5%, der Einheiten im Harz die Summe c+d gleich 2 ist.

Besonders bevorzugt handelt es sich bei Komponente (B2) um Organopolysiloxanharze, die im Wesentlichen aus R²₃SiO_{1/2} (M)- und SiO_{4/2}(Q)-Einheiten bestehen mit R² gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze (B2) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Komponente (B2) sind handelsübliche Produkte bzw. können nach in der Siliciumchemie gängigen Verfahren hergestellt werden.

Falls es sich bei dem erfindungsgemäß eingesetzten Zusatzstoff (B) um eine Mischung aus Komponenten (B1) und (B2) handelt, ist das Gewichtsverhältnis von (B1) zu (B2) in der Mischung bevorzugt 0,01 bis 50, besonders bevorzugt 0,1 bis 7.

Beispiele für Wasserarten, welche erfindungsgemäß eingesetzt werden können, sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Welche Wasserqualität als Komponente (C) verwendet wird, ist ebenfalls nicht kritisch, hängt jedoch von der beabsichtigen Verwendung ab. Wenn z.B. die erfindungsgemäße Zusammensetzung in der Lebensmittelindustrie oder Pharmazie eingesetzt werden soll, ist die Verwendung von gereinigtem Wasser entsprechend Pharmacopeia sinnvoll. Bevorzugt wird als Wasser (C) vollentsalztes Wasser und gereinigtes Wasser eingesetzt, wobei gereinigtes Wasser besonders bevorzugt ist.

Die erfindungsgemäßen Zusammensetzungen enthalten Wasser (C) in Mengen von bevorzugt 0,01 bis 0,5 Gewichtsteilen, besonders bevorzugt 0,02 bis 0,1 Gewichtsteilen, jeweils bezogen auf 100 Gewichtsteile Komponente (A).

Neben den Komponenten (A) bis (C) können die erfindungsgemäßen Entschäumerformulierungen weitere Stoffe (D) enthalten, die bereits bisher in Entschäumerformulierungen verwendet werden.

Beispiele für gegebenenfalls eingesetzte Komponente (D) sind (silicium)organische Verbindungen, Tenside, Emulgatoren, Lösungsvermittler, Konservierungsstoffe, Farbstoffe, Geschmacksstoffe, Geruchsstoffe, Füllstoffe, Verdickungsmittel, Trägersubstanzen und Hilfsstoffe.

Bei der gegebenenfalls als Komponente (D) eingesetzten (silicium)organischen Verbindungen handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Estern der Phosphorsäure und Wachsen, wasserlösliche organische Verbindungen, wie wasserlösliche Polymere, z.B. Polyvinylalkohol, und siliciumorganische Verbindungen, die unterschiedlich sind zu Komponenten (A) und (B), wie z.B. Kieselester, Organosilane und cyclische Dimethylsiloxane.

Unter dem Begriff "wasserunlöslich" soll im Sinne der vorliegenden Erfindung eine Löslichkeit in Wasser bei 25°C und einem Druck von 101,325 hPa von maximal 3 Gewichtsprozenten verstanden werden.

Beispiele für gegebenenfalls als Komponente (D) eingesetzte Tenside sind Organosiliciumverbindungen verschieden zu Komponenten (A) und (B), die linear oder verzweigt sein können und mindestens eine Polyethergruppierung tragen, oder organische Tenside, wie ethoxylierte Alkohole.

Beispiele für gegebenenfalls als Komponente (D) eingesetzte Verdickungsmittel sind beliebige, bisher bekannte Verdickungsmittel, wie z.B. Celluloseether und modifizierte Bentonite.

Beispiele für gegebenenfalls als Komponente (D) eingesetzte Trägersubstanzen sind alle bisher bekannten Trägersubstanzen, aus denen beispielsweise Pulver formuliert werden können, wie Zeolithe, Cellulosepulver und Natriumsulfat.

Beispiele für gegebenenfalls als Komponente (D) eingesetzte Hilfsstoffe sind basische organische oder anorganische Verbindungen, wie KOH oder Amine sowie deren Salze, saure organische oder anorganische Verbindungen, wie Schwefelsäure, Phosphornitrilchlorid oder Difluormethansulfonsäure sowie deren Salze, und metallorganische Verbindungen.

Die Menge an gegebenenfalls eingesetzter Komponente (D) kann stark variieren und richtet sich im Wesentlichen nach der Art der Komponente sowie nach dem Anwendungsgebiet der erfindungsgemäßen Zusammensetzungen.

Bevorzugt handelt es sich bei der gegebenenfalls eingesetzten Komponente (D) um wasserunlösliche organische Verbindungen sowie um Tenside.

Die erfindungsgemäßen Zusammensetzungen enthalten wasserunlösliche organische Verbindung in Mengen von bevorzugt 0 bis 1000 Gewichtsteilen, besonders bevorzugt 0 bis 100 Gewichtsteilen, jeweils bezogen auf 100 Gewichtsteile der Komponente (A).

Bei der gegebenenfalls als Komponente (D) eingesetzten Organosiliciumverbindungen mit Polyethergruppierungen handelt es sich vorzugsweise um lineare oder verzweigte Siloxane mit SiC-gebundenen seitenständigen Polyoxyethylen- und/oder Polyoxypropylengruppen, wobei über Polyoxyethylen- und/oder Polyoxypropylengruppen verzweigte Polyethersiloxane besonders bevorzugt sind. Derartige polyethermodifizierte Verbindungen sind bekannt und z.B. in EP-A 1076073 beschrieben.

Die erfindungsgemäßen Zusammensetzungen enthalten diese Organosiliciumverbindungen (D) in Mengen von bevorzugt 0 bis 50 Gewichtsteilen, besonders bevorzugt 1 bis 10 Gewichtsteilen, jeweils bezogen auf 100 Gewichtsteile der Komponente (A).

Bei den in den erfindungsgemäßen Zusammensetzungen eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zusammensetzungen um solche, die aus
(A) mindestens ein Organopolysiloxan aus Einheiten der Formel (I),
(B) 0,1 bis 30 Gewichtsteile, bezogen auf 100 Gewichtsteile (A), mindestens eines Zusatzstoffes ausgewählt aus
   (B1) Füllstoffpartikeln und/oder
   (B2) Organopolysiloxanharz aus Einheiten der Formel (II),
(C) 0,005 bis 1,0 Gewichtsteile, bezogen auf 100 Gewichtsteile (A), Wasser und gegebenenfalls
(D) weitere Stoffe
   bestehen.

Besonders bevorzugt handelt es sich bei den erfindungsgemäßen Zusammensetzungen um solche, die aus
(A) mindestens ein Organopolysiloxan aus Einheiten der Formel (I),
(B) 0,1 bis 30 Gewichtsteile, bezogen auf 100 Gewichtsteile (A), mindestens eines Zusatzstoffes ausgewählt aus
   (B1) Füllstoffpartikeln und/oder
   (B2) Organopolysiloxanharz aus Einheiten der Formel (II),
(C) 0,005 bis 1,0 Gewichtsteile, bezogen auf 100 Gewichtsteile (A), Wasser und
   gegebenenfalls
(D) wasserunlösliche organische Verbindung
   bestehen.

Vorzugsweise enthalten die erfindungsgemäßen Entschäumerzusammensetzungen, wenn sie im Lebensmittelbereich oder der Pharmazie eingesetzt werden, als Komponente (A) ein α,ω-Trimethylsiloxypolydimethylsiloxan und als Komponente (B) eine nicht vorbehandelte pyrogene oder gefällte Kieselsäure, wobei die erfindungsgemäßen Zusammensetzungen als Verunreinigungen bevorzugt weniger als 1000 ppm Metalle, besonders bevorzugt weniger als 300 ppm Metalle, sowie bevorzugt weniger als 10 ppm Schwermetalle, enthalten. Der Begriff Metalle schließt hierbei alle Elemente der 1.-3. Hauptgruppe des Periodensystems, ausgenommen Wasserstoff, ein, sowie Zinn, Blei, Arsen, Antimon und Wismut und alle Elemente der Nebengruppen. Der Begriff Schwermetalle schließt alle Metalle ein, die bei der Analyse des Entschäumers nach der Monographie "Simethicone" des Europäischen Arzneibuches erfasst werden.

Die erfindungsgemäßen Zusammensetzungen sind bevorzugt viskose klare bis opake Flüssigkeiten.

Die erfindungsgemäßen Zusammensetzungen haben eine Viskosität von vorzugsweise 10 bis 1 000 000 mPas, insbesondere von 100 bis 100 000 mPas, jeweils bei 25°C.

Das Herstellen der erfindungsgemäßen Zusammensetzungen kann nach bekannten Verfahren, wie z.B. durch Mischen aller Komponenten erfolgen, wie z.B. unter Anwendung von hohen Scherkräften in Kolloidmühlen, Dissolvern oder Rotor-Stator-Homogenisatoren. Die Reihenfolge, in der die einzelnen Komponenten vermischt werden, ist unkritisch. So kann z.B. erst Komponente (A) und (B) vermischt und dann das Wasser (C) zugegeben werden, woran sich ein weiterer Mischvorgang anschließt. Es ist aber auch möglich, dass die eingesetzte Menge an Wasser bereits vor dem Vermischen der Komponenten (A) und (B) in einer der beiden Komponenten oder auch anteilig in beiden Komponenten enthalten ist. Die optionalen Zusatzstoffe (D) können gemeinsam mit (A) - (C) vermischt werden. Es ist jedoch auch möglich, dass zuerst eine Entschäumerformulierung aus (A) bis (C) hergestellt wird und diese dann in einem zweiten Schritt durch Zugabe von (D) zu einer modifizierten Formulierung weiter verarbeitet wird.

Ein weiterer Gegenstand der vorliegenden Erfindung ist ein Verfahren zur Herstellung der erfindungsgemäßen Zusammensetzungen, dadurch gekennzeichnet, dass Komponenten (A), (B) und (C) sowie gegebenenfalls (D) miteinander vermischt und auf 50 bis 300°C erhitzt werden.

Falls in dem erfindungsgemäßen Verfahren als Komponente (B) Füllstoffpartikel (B1) eingesetzt werden, kann eine in situ Hydrophobierung von (B1) durchgeführt werden, indem die Mischung bei Temperaturen von 100 bis 300°C mit den oben beschrieben Katalysatoren und Hydrophobiermittel erhitzt wird. Diese in situ Hydrophobierung kann gleichzeitig mit dem Vermischen von (A), (B), (C) und gegebenenfalls (D) oder anschließend durchgeführt werden. Es ist jedoch bevorzugt, dass keine Katalysatoren verwendet werden.

Bei dem erfindungsgemäßen Verfahren kann das Erhitzen nach oder während des Vermischens stattfinden. Im Anschluss an das Erhitzen der Mischung kann diese nochmalig homogenisiert werden.

Das erfindungsgemäße Vermischen wird bei Temperaturen von bevorzugt 10 bis 300°C, besonders bevorzugt 20 bis 200°C, durchgeführt.

Das erfindungsgemäße Verfahren wird bei einem Druck von bevorzugt 1 bis 300 hPa, besonders bevorzugt 10 bis 150 hPa, durchgeführt. Ein Mischen bei reduziertem Druck ist insbesondere deshalb bevorzugt, um das Einmischen von Luft, welche z.B. in hochdispersen Füllstoffen enthalten ist, zu verhindern.

In einer bevorzugten Ausführungsform des erfindungsgemäßen Verfahrens werden 100 Gewichtsteile Komponente (A) mit 0,1 bis 30 Gewichtsteilen (B) in Gegenwart von 0,005 bis 1,0 Gewichtsteilen Wasser und ggf. weiteren Stoffen (D) unter Anwendung von hohen Scherkräften z.B. in Kolloidmühlen, Dissolvern, Rotor-Stator-Homogenisatoren oder auch z.B. mit Hochdruckhomogenisatoren vermischt, wobei durch das Vermischen ein Energieeintrag von bevorzugt mindestens 0,1 kJ/kg, besonders bevorzugt von 1 bis 10 000 kJ/kg, insbesondere von 5 bis 1 000 kJ/kg, erfolgt.

Das erfindungsgemäße Verfahren hat den Vorteil, dass es einfach in der Durchführung und sehr wirtschaftlich ist.

Das erfindungsgemäße Verfahren hat den Vorteil, dass nach diesem Verfahren hergestellte Entschäumerformulierungen eine hohe Wirksamkeit in unterschiedlichen Tensidsystemen aufweisen.

Die erfindungsgemäßen Zusammensetzungen können überall eingesetzt werden, wo Zusammensetzungen auf der Basis von Organosiliciumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder Schaumverhinderung von Medien, dadurch gekennzeichnet, dass die erfindungsgemäßen bzw. erfindungsgemäß hergestellten Zusammensetzungen mit dem Medium vermischt werden.

Der Zusatz der erfindungsgemäßen Zusammensetzungen zu den schäumenden Medien kann direkt erfolgen, in geeigneten Lösungsmitteln, wie Toluol, Xylol, Methylethylketon oder t-Butanol, gelöst, als Pulver oder als Emulsion. Die zur Erzielung der gewünschten Entschäumerwirkung notwendige Menge richtet sich z.B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum schäumenden Medium zugegeben.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerformulierungen können überall dort eingesetzt werden, wo störender Schaum unterdrückt werden soll. Das ist z.B. in nichtwässrigen Systemen wie bei der Teerdestillation oder der Erdölverarbeitung der Fall. Insbesondere eigenen sich die erfindungsgemäßen Entschäumerformulierungen zur Bekämpfung von Schaum in wässrigen Tensidsystemen, wobei sie sich gegenüber Entschäumerformulierungen nach dem Stand der Technik durch eine höhere, länger anhaltende Wirksamkeit bei geringen Zusatzmengen auszeichnen. Die Anwendung erfolgt z.B. in Lebensmitteln (wie z.B. bei der Kartoffelwäsche, bei Gärprozessen oder der Zuckerherstellung), Anwendungen in der Pharmazie (z.B. bei Fermentationen von Penizillin oder als Antiflatulenzmittel), in Wasch- und Reinigungsmitteln, bei der Bekämpfung von Schaum in Abwasseranlagen, bei Textilfärbeverfahren, bei der Erdgaswäsche, in Polymerdispersionen und beim Entschäumen von bei der Zellstoffherstellung anfallenden wässrigen Medien.

Es ist auch möglich, unter Verwendung der erfindungsgemäßen Zusammensetzungen Pulver oder Emulsionen zu formulieren, die dann zu den schäumenden Flotten zugesetzt werden.

Die Herstellung von Emulsionen unter Verwendung von Entschäumerformulierungen ist dem Fachmann bekannt.

Die erfindungsgemäßen Zusammensetzungen können auch zu frei fließenden Pulver weiterformuliert werden. Diese sind z.B. bei der Anwendung in pulverförmigen Waschmitteln bevorzugt. Die Herstellung dieser Pulver ausgehend von der Mischung der Komponenten (A), (B), (C) und gegebenenfalls (D) erfolgt nach dem Fachmann bekannten Verfahren, wie Sprühtrocknung oder Aufbaugranulation und dem Fachmann bekannten Zusätzen.

Die unter Verwendung der erfindungsgemäßen Zusammensetzungen hergestellten Pulver enthalten bevorzugt 2 bis 20 Gewichts-% Komponenten (A) bis (D). Als Träger kommen z.B. Zeolithe, Natriumsulfat, Cellulosederivate, Harnstoff und Zucker zum Einsatz. Weitere Bestandteile der erfindungsgemäßen Pulver können z.B. Wachse sein oder organischen Polymere, wie sie z.B. in EP-A 887 097 und EP-A 1 060 778 beschrieben sind.

Ein weiterer Gegenstand der vorliegenden Erfindung sind Wasch- und Reinigungsmittel enthaltend die erfindungsgemäßen und/oder erfindungsgemäß hergestellten Zusammensetzungen.

Die erfindungsgemäßen Zusammensetzungen haben den Vorteil, dass sie als Entschäumer leicht handhabbar sind und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, sowie bei einer relativen Luftfeuchte von 50% durchgeführt. Alle in den Beispielen angeführten Viskositätsangaben beziehen sich auf eine Temperatur von 25°C.

Im Folgenden werden die Abkürzungen Me gleich Methylrest, Oct gleich n-Octylrest, Dd Dodecylrest, Hd gleich Hexadecylrest und Hex gleich n-Hexylrest verwendet.

Die analytische Bestimmung der Wassermenge in den Zusammensetzungen der Beispiele erfolgte mit der dem Fachmann bekannten Methode der "Karl Fischer Titration".

Folgende Produkte wurden als Komponente (A) eingesetzt:
- A1: Ein trimethylsiloxyterminiertes Polydimethylsiloxan mit einer Viskosität von 1000 mPas;
- A2: Ein trimethylsiloxyterminiertes Polydimethylsiloxan mit einer Viskosität von 350 mPas;
- A3: Ein trimethylsiloxyterminiertes Polydimethyl-methylphenylsiloxan mit 35 mol% (bezogen auf Si) an Me₂SiO_{2/2-}Einheiten und 62 mol% an PhSi(Me)O_{2/2}- Einheiten und einer Viskosität von 1250 mPas;
- A4: Ein Polydimethylsiloxan mit endständigen C₂₀-Alkoxygruppen und einer Viskosität von 50 mPas;
- A5: Ein Trimethylsiloxyterminiertes Polydiorganosiloxan mit 50 mol% Octylmethylsiloxyeinheiten, 48 mol% 2-Phenylpro- penylmethylsiloxyeinheiten und 2 mol% Wasserstoffmethylsiloxyeinheiten und einer Viskosität von 1570 mPas.

Folgende Produkte wurden als Komponente (B) eingesetzt:
- B11: Eine pyrogene Kieselsäure mit einer BET-Oberfläche von 200 m²/g (erhältlich unter dem Namen HDK® N20 bei der Wacker-Chemie GmbH, Deutschland);
- B12: Eine gefällte Kieselsäure mit einer BET-Oberfläche von 165 m²/g (erhältlich unter dem Namen Sipernat® 160 bei der Degussa AG, Deutschland);
- B13: Eine pyrogene Kieselsäure mit einer BET-Oberfläche von 130 m²/g (erhältlich unter dem Namen HDK® S13 bei der Wacker-Chemie GmbH, Deutschland) und
- B14: Eine pyrogene mit Hexamethyldisilazan behandelte Kieselsäure mit einer BET-Oberfläche von 200 m²/g (erhältlich unter dem Namen HDK® H2000 bei der Wacker-Chemie GmbH, Deutschland);

### Prüfungen der Entschäumerwirksamkeit

Die Wirksamkeit wird anhand der Antischaumkennzahl AKZ chakterisiert:
In einer Vorrichtung entsprechend DE-OS 25 51 260 werden 200 ml einer 4 Gew.-%igen wässrigen Lösung eines Natriumalkylsulfonates (erhältlich unter der Bezeichnung Mersolat® bei der Bayer AG, Deutschland) die 10 mg des zu untersuchenden Entschäumers (gelöst in der 10-fachen Menge an Methyl-Ethyl-Keton) enthält 1 min mit zwei gegenläufigen Rührern aufgeschäumt. Anschließend wir der Schaumzerfall über ein System von Lichtschranken aufgezeichnet und mit einem PC ausgewertet. Aus der Fläche der Auftragung Schaumhöhe gegen die Zeit wird die Antischaumkennzahl berechnet. Je niedriger diese Zahl ist, desto wirksamer ist der Entschäumer.

### Beispiel 1

100 Teile A1 werden mit 1,5 Teilen B11 und 5 Teilen B12 vermischt. Zu dieser Mischung werden 0,1 Teile demineralisiertes Wasser gegeben. Anschließend wird die Mischung 5 Minuten mit einer Dissolverscheibe bei 1500 U/min homogenisiert. Eine analysierte Probe zeigte einen Wassergehalt von 0,08 %. Diese Mischung wird für eine Dauer von 2 Stunden bei 150°C ausgeheizt. Es wurde eine opake Formulierung mit einer Viskosität von 2240 mPas erhalten.

Die Wirksamkeit der hergestellten Entschäumerformulierung ist in Tabelle 1 dargestellt.

### Beispiel 2

Die in Beispiel 1 beschriebene Verfahrensweise wird wiederholt mit der Abänderung, dass anstelle von 0,1 Teilen 0,5 Teile Wasser zugegeben werden, wobei ein Wassergehalt von 0,4 % in der Mischung analysiert wurde. Es wurde eine opake Formulierung mit einer Viskosität von 2192 mPas erhalten.

Die Wirksamkeit der hergestellten Entschäumerformulierung ist in Tabelle 1 dargestellt.

### Vergleichsbeispiel 1

Die in Beispiel 1 beschriebene Verfahrensweise wird wiederholt mit der Abänderung, dass kein Wasser zugesetzt wurde, wobei weniger als 50 ppm Wasser in der Mischung nachweisbar waren. Es wurde eine opake Formulierung mit einer Viskosität von 2224 mPas erhalten.

Die Wirksamkeit der hergestellten Entschäumerformulierung ist in Tabelle 1 dargestellt.

**Tabelle 1**

| | Wassergehalt | AKZ |
|---|---|---|
| Beispiel 1 | 0,08% | 2150 |
| Beispiel 2 | 0,4% | 1370 |
| Vergleichsbeispiel 1 | <0,005% | 5120 |

### Beispiel 3

100 Teile A2 werden mit 5 Teilen B13 und 2 Teilen B14 vermischt. Zu dieser Mischung werden 0,1 Teile demineralisiertes Wasser gegeben. Anschließend wird die Mischung 5 Minuten mit einer Dissolverscheibe bei 1500 U/min homogenisiert. Eine analysierte Probe zeigte einen Wassergehalt von 0,03 %. Diese Mischung wird für eine Dauer von 2 Stunden bei 150°C ausgeheizt. Es wurde eine opake Formulierung mit einer Viskosität von 1250 mPas erhalten.

Die Wirksamkeit der hergestellten Entschäumerformulierung ist in Tabelle 2 dargestellt.

### Beispiel 4

Die in Beispiel 3 beschriebene Verfahrensweise wird wiederholt mit der Abänderung, dass anstelle von 0,1 Teilen 0,5 Teile Wasser zugegeben werden, wobei ein Wassergehalt von 0,04 % in der Mischung analysiert wurde. Es wurde eine opake Formulierung mit einer Viskosität von 1344 mPas erhalten.

Die Wirksamkeit der hergestellten Entschäumerformulierung ist in Tabelle 2 dargestellt.

### Vergleichsbeispiel 2

Die in Beispiel 3 beschriebene Verfahrensweise wird wiederholt mit der Abänderung, dass kein Wasser zugesetzt wurde, wobei weniger als 50 ppm Wasser in der Mischung nachweisbar waren. Es wurde eine opake Formulierung mit einer Viskosität von 1480 mPas erhalten.

Die Wirksamkeit der hergestellten Entschäumerformulierung ist in Tabelle 2 dargestellt.

**Tabelle 2**

| | Wassergehalt | AKZ |
|---|---|---|
| Beispiel 3 | 0,03% | 1020 |
| Beispiel 4 | 0,04% | 980 |
| Vergleichsbeispiel 2 | <0,005% | 3990 |

### Beispiel 5

100 Teile des Polysiloxans A3, 5 Teile des Polysiloxans A4, 3 Teile eines Siliconharzes, welches im Wesentlichen aus Einheiten der allgemeinen Formel Me₃SiO_{1/2}- und SiO_{4/2}- besteht, und 5 Teile der Kieselsäure B11 werden miteinander vermischt. Zu dieser Mischung werden 0,1 Teile demineralisiertes Wasser gegeben. Anschließend wird die Mischung 5 Minuten mit einer Dissolverscheibe bei 1500 U/min homogenisiert. Eine analysierte Probe zeigte einen Wassergehalt von 0,03 %. Diese Mischung wird für eine Dauer von 4 Stunden bei 150°C ausgeheizt. Es wurde eine opake Formulierung mit einer Viskosität von 13600 mPas erhalten.

Die Wirksamkeit der hergestellten Entschäumerformulierung ist in Tabelle 3 dargestellt.

### Beispiel 6

Die in Beispiel 5 beschriebene Verfahrensweise wird wiederholt mit der Abänderung, dass anstelle von 0,1 Teilen 0,5 Teile Wasser zugegeben werden, wobei ein Wassergehalt von 0,05 % in der Mischung analysiert wurde. Es wurde eine opake Formulierung mit einer Viskosität von 16800 mPas erhalten.

Die Wirksamkeit der hergestellten Entschäumerformulierung ist in Tabelle 3 dargestellt.

### Vergleichsbeispiel 3

Die in Beispiel 5 beschriebene Verfahrensweise wird wiederholt mit der Abänderung, dass kein Wasser zugesetzt wurde, wobei weniger als 50 ppm Wasser in der Mischung nachweisbar waren. Es wurde eine opake Formulierung mit einer Viskosität von 19900 mPas erhalten.

Die Wirksamkeit der hergestellten Entschäumerformulierung ist in Tabelle 3 dargestellt.

**Tabelle 3**

| | Wassergehalt | AKZ |
|---|---|---|
| Beispiel 5 | 0,03% | 607 |
| Beispiel 6 | 0,05% | 437 |
| Vergleichsbeispiel 3 | <0,005% | 1260 |

### Beispiel 7

100 Teile des Polysiloxans A5, 5 Teile eines Siliconharzes, welches im Wesentlichen aus Einheiten der allgemeinen Formel Me₃SiO_{1/2}- und SiO_{4/2}- besteht, und 5 Teile der Kieselsäure B11 werden miteinander vermischt. Zu dieser Mischung werden 0,1 Teile demineralisiertes Wasser gegeben. Anschließend wird die Mischung 5 Minuten mit einer Dissolverscheibe bei 1500 U/min homogenisiert. Eine analysierte Probe zeigte einen Wassergehalt von 0,08 %. Diese Mischung wird für eine Dauer von 4 Stunden bei 150°C ausgeheizt. Es wurde eine opake Formulierung mit einer Viskosität von 35200 mPas erhalten.

Die Wirksamkeit der hergestellten Entschäumerformulierung ist in Tabelle 4 dargestellt.

### Vergleichsbeispiel 4

Die in Beispiel 7 beschriebene Verfahrensweise wird wiederholt mit der Abänderung, dass kein Wasser zugesetzt wurde, wobei weniger als 50 ppm Wasser in der Mischung nachweisbar waren. Es wurde eine opake Formulierung mit einer Viskosität von 90400 mPas erhalten.

Die Wirksamkeit der hergestellten Entschäumerformulierung ist in Tabelle 4 dargestellt.

**Tabelle 4**

| | Wassergehalt | AKZ |
|---|---|---|
| Beispiel 7 | 0,05% | 465 |
| Vergleichsbeispiel 4 | <0,005% | 1025 |

## Patentansprüche

1. Zusammensetzungen enthaltend
(A) mindestens ein Organopolysiloxan aus Einheiten der Formel
Rₐ(R¹O)_{b}SiO_{(4-a-b)/2} (I),
worin
R gleich oder verschieden sein kann und Wasserstoffatom oder einen einwertigen, SiC-gebundenen, gegebenenfalls substituierten Kohlenwasserstoffrest bedeutet,
R¹ gleich oder verschieden sein kann und Wasserstoffatom oder einen einwertigen, gegebenenfalls substituierten Kohlenwasserstoffrest bedeutet,
a 0, 1, 2 oder 3 ist und
b 0, 1, 2 oder 3 ist,
mit der Maßgabe, dass die Summe a+b kleiner oder gleich 3 ist und die Organopolysiloxane aus 5 bis 50 000, bevorzugt aus 5 bis 10 000 Einheiten der Formel (I) bestehen,
(B) 0,1 bis 30 Gewichtsteile, vorzugsweise 1 bis 15 Gewichtsteile, jeweils bezogen auf 100 Gewichtsteile Komponente (A), mindestens eines Zusatzstoffes, ausgewählt aus
(B1) Füllstoffpartikeln und/oder
(B2) Organopolysiloxanharz aus Einheiten der Formel
R²_{c} (R³O)_{d}SiO_{(4-c-d)/2} (II),
worin
R² gleich oder verschieden sein kann und Wasserstoffatom oder einen einwertigen, gegebenenfalls substituierten, SiC-gebundenen Kohlenwasserstoffrest bedeutet,
R³ gleich oder verschieden sein kann und ein Wasserstoffatom oder einen einwertigen, gegebenenfalls substituierten Kohlenwasserstoffrest bedeutet.
c 0, 1, 2 oder 3 ist und
d 0, 1, 2 oder 3 ist,
mit der Maßgabe, dass die Summe c+d kleiner oder gleich 3 ist und in weniger als 50 % aller Einheiten der Formel (II) im Organopolysiloxanharz die Summe c+d gleich 2 ist, und
(C) 0,005 bis 1,0 Gewichtsteile Wasser, bezogen auf 100 Gewichtsteile Komponente (A).

2. Zusammensetzungen gemäß Anspruch 1, **dadurch gekennzeichnet, dass** es sich bei Komponente (A) um im Wesentlichen lineare Organopolysiloxane der Formel
R₃Si-(O-SiR₂)ₘ-O-SiR₃ (III)
handelt, wobei R die oben genannte Bedeutung besitzt und m einen Wert von 5 bis 2000 hat.

3. Zusammensetzungen gemäß Anspruch 1 oder 2, **dadurch gekennzeichnet, dass** es sich bei Komponente (A) um α,ω-Trimethylsiloxydimethylpolysiloxane handelt.

4. Zusammensetzungen gemäß Anspruch 1 oder 2, **dadurch gekennzeichnet, dass** es sich bei Komponente (A) um Polysiloxane der allgemeinen Formel
R" (CH₃)₂Si- (O-Si (CH₃) R')ₙ- (O-Si (CH₃)₂)ₒ- (O-SiH (CH₃))ₚ-O-Si(CH₃)₂R" (IV)
handelt, wobei
R' gleiche oder verschiedene Kohlenwasserstoffreste mit mindestens 2 Kohlenstoffatomen bedeutet,
R" gleich oder verschieden sein kann und R' oder Methylrest bedeutet,
n eine ganze Zahl größer 1 ist.
o 0 oder eine ganze Zahl ist und
p 0 oder eine ganze Zahl ist,
mit der Maßgabe, dass die Summe aus n, o und p einen Wert von 5 bis 2000 hat und p/(n+o+p) kleiner als 0,1 ist.

5. Zusammensetzungen gemäß Anspruch 1 oder 2, **dadurch gekennzeichnet, dass** es sich bei der Komponente (A) um Organosiliciumverbindungen aus Bausteinen der allgemeinen Formel (I) handelt, worin R einen Methylrest und R¹ einen linearen und/oder verzweigten Kohlenwasserstoffrest mit mindestens 6 Kohlenstoffatomen bedeuten, b durchschnittlich einen Wert von 0,005 bis 0,5 hat und die Summe (a+b) durchschnittlich einen Wert von 1,9 bis 2,1 annimmt.

6. Zusammensetzungen gemäß einem oder mehreren der Ansprüche 1 bis 5, **dadurch gekennzeichnet, dass** es sich um solche handelt, die aus
(A) mindestens ein Organopolysiloxan aus Einheiten der Formel (I),
(B) 0,1 bis 30 Gewichtsteile, bezogen auf 100 Gewichtsteile (A), mindestens eines Zusatzstoffes ausgewählt aus
(B1) Füllstoffpartikeln und/oder
(B2) Organopolysiloxanharz aus Einheiten der Formel (II),
(C) 0,005 bis 1,0 Gewichtsteile, bezogen auf 100 Gewichtsteile (A), Wasser und gegebenenfalls
(D) weitere Stoffe bestehen.

7. Verfahren zur Herstellung der Zusammensetzungen gemäß einem oder mehreren der Ansprüche 1 bis 6, **dadurch gekennzeichnet, dass** Komponenten (A), (B) und (C) sowie gegebenenfalls (D) miteinander vermischt und auf 50 bis 300°C erhitzt werden.

8. Verfahren nach Anspruch 7, **dadurch gekennzeichnet, dass** das Vermischen bei Temperaturen von 10 bis 300 °C durchgeführt wird.

9. Verfahren zum Entschäumen und/oder Schaumverhinderung von Medien, **dadurch gekennzeichnet, dass** die Zusammensetzungen gemäß einem oder mehreren der Ansprüche 1 bis 6 bzw. hergestellt gemäß Anspruch 7 oder 8 mit dem Medium vermischt werden.

10. Wasch- und Reinigungsmittel enthaltend die Zusammensetzungen gemäß einem oder mehreren der Ansprüche 1 bis 6 bzw. hergestellt gemäß Anspruch 7 oder 8.

## Claims

1. Compositions comprising
(A) at least one organopolysiloxane comprising units of the formula
Ra(R¹O)_{b}SiO_{(4-a-b)/2} (I),
in which
R can be identical or different and denotes hydrogen atom or a monovalent, SiC-bonded, optionally substituted hydrocarbon radical,
R¹ can be identical or different and denotes hydrogen atom or a monovalent, optionally substituted hydrocarbon radical,
a is 0, 1, 2 or 3, and
b is 0, 1, 2 or 3,
with the proviso that the sum a+b is less than or equal to 3 and the organopolysiloxanes are composed of 5 to 50 000, preferably of 5 to 10 000, units of the formula (I) ,
(B) 0.1 to 30 parts by weight, preferably 1 to 15 parts by weight, based in each case on 100 parts by weight of component (A), of at least one additive selected from
(B1) filler particles and/or
(B2) organopolysiloxane resin comprising units of the formula
R²_{c} (R³O)_{d}SiO_{(4-c-d)/2} (II),
in which
R² can be identical or different and denotes hydrogen atom or a monovalent, optionally substituted, SiC-bonded hydrocarbon radical,
R³ can be identical or different and denotes a hydrogen atom or a monovalent, optionally substituted hydrocarbon radical,
c is 0, 1, 2 or 3, and
d is 0, 1, 2 or 3,
with the proviso that the sum c+d is less than or equal to 3 and in less than 50% of all units of the formula (II) in the organopolysiloxane resin the sum c+d is 2, and
(C) 0.005 to 1.0 part by weight of water, based on 100 parts by weight of component (A).

2. Compositions according to Claim 1, **characterized in that** component (A) comprises substantially linear organopolysiloxanes of the formula
R₃Si-(O-SiR₂)ₘ-O-SiR₃ (III)
where R is as defined above and m has a value of 5 to 2000.

3. Compositions according to Claim 1 or 2, **characterized in that** component (A) comprises α,ω-trimethylsiloxydimethylpolysiloxanes.

4. Compositions according to Claim 1 or 2, **characterized in that** component (A) comprises polysiloxanes of the general formula
R" (CH₃) ₂Si- (O-Si (CH₃)R')ₙ- (O-Si (CH₃)₂)ₒ- (O-SiH (CH₃))ₚ-O-Si(CH₃)₂R(IV)
where
R' denotes identical or different hydrocarbon radicals having at least 2 carbon atoms,
R" can be identical or different and denotes R' or
methyl radical,
n is an integer greater than 1,
o is 0 or an integer, and
p is 0 or an integer,
with the proviso that the sum of n, o, and p has a value of 5 to 2000 and p/(n+o+p) is less than 0.1.

5. Compositions according to Claim 1 or 2, **characterized in that** component (A) comprises organosilicon compounds comprising units of the general formula (I) in which R is a methyl radical and R¹ is a linear and/or branched hydrocarbon radical having at least 6 carbon atoms, b has on average a value of 0.005 to 0.5, and the sum (a+b) assumes on average a value of 1.9 to 2.1.

6. Compositions according to one or more of Claims 1 to 5, **characterized in that** it concerns those which are composed of
(A) at least one organopolysiloxane comprising units of the formula (I),
(B) 0.1 to 30 parts by weight, based on 100 parts by weight of (A), of at least one additive selected from
(B1) filler particles and/or
(B2) organopolysiloxane resin comprising units of the formula (II),
(C) 0.005 to 1.0 part by weight, based on 100 parts by weight of (A), of water, and
where appropriate
(D) further substances.

7. Process for preparing the compositions according to one or more of Claims 1 to 6, **characterized in that** components (A), (B), and (C), and also, if used, (D) are mixed with one another and heated at 50 to 300°C.

8. Process according to Claim 7, **characterized in that** mixing is performed at temperatures of 10 to 300°C.

9. Method of defoaming and/or preventing foam in media, **characterized in that** the compositons according to one or more of Claims 1 to 6 or prepared according to Claim 7 or 8 are mixed with the medium.

10. Laundry detergents and cleaning products comprising the compositions according to one or more of Claims 1 to 6 or prepared according to Claim 7 or 8.

## Revendications

1. Compositions contenant
(A) au moins un organopolysiloxane d'unités de formule
Rₐ(R¹O)_{b}SiO_{(4-a-b)1/2} (I)
où
R peut être identique ou différent et signifie un atome d'hydrogène ou un radical hydrocarboné monovalent, lié par SiC, le cas échéant substitué,
R¹ peut être identique ou différent et signifie un atome d'hydrogène ou un radical hydrocarboné monovalent, le cas échéant substitué,
a vaut 0, 1, 2 ou 3 et
b vaut 0, 1, 2 ou 3,
à condition que la somme a+b soit inférieure ou égale à 3 et que les organopolysiloxanes soient constitués par 5 à 50 000, de préférence 5 à 10 000 unités de formule (I),
(B) 0,1 à 30 parties en poids, de préférence 1 à 15 parties en poids, à chaque fois par rapport à 100 parties en poids du composant (A), d'au moins un additif, choisi parmi
(B1) des particules de charge et/ou
(B2) une résine d'organopolysiloxane d'unités de formule
R²_{c}(R³O)_{d}SiO_{(4-c-d)/2} (II),
où
R² peut être identique ou différent et signifie un atome d'hydrogène ou un radical hydrocarboné monovalent, lié par SiC, le cas échéant substitué,
R³ peut être identique ou différent et signifie un atome d'hydrogène ou un radical hydrocarboné monovalent, le cas échéant substitué,
c vaut 0, 1, 2 ou 3 et
d vaut 0, 1, 2 ou 3,
à condition que la somme c+d soit inférieure ou égale à 3 et que dans moins de 50% de toutes les unités de formule (II) dans la résine organopolysiloxane, la somme c+d soit égale à 2, et
(C) 0,005 à 1,0 partie en poids d'eau, par rapport à 100 parties en poids de composant (A).

2. Compositions selon la revendication 1,
**caractérisées**
**en ce qu'**il s'agit, pour le composant (A), d'organopolysiloxanes essentiellement linéaires de formule
R₃Si-(O-SiR₂)ₘ-O-SiR₃ (III)
où R présente la signification susmentionnée et m présente une valeur de 5 à 2000.

3. Compositions selon la revendication 1 ou 2,
**caractérisées**
**en ce qu'**il s'agit, pour le composant (A) d'α, ω-triméthylsiloxydiméthylpolysiloxanes.

4. Compositions selon la revendication 1 ou 2,
**caractérisées**
**en ce qu'**il s'agit, pour le composant (A), de polysiloxanes de formule générale
R'' (CH₃)₂Si- (O-Si (CH₃)R')ₙ- (O-Si (CH₃)₂)ₒ- (O-SiH(CH₃))ₚ-O-Si(CH₃)₂R' ' (IV)
où
R' signifie des radicaux hydrocarbonés identiques ou différents comprenant au moins 2 atomes de carbone,
R" peut être identique ou différent et signifie R' ou un radical méthyle,
n est un nombre entier supérieur à 1,
o vaut 0 ou un nombre entier et
p vaut 0 ou un nombre entier,
à condition que la somme de n, o et p vaille 5 à 2000 et p/(n+o+p) soit inférieur à 0,1.

5. Compositions selon la revendication 1 ou 2,
**caractérisées**
**en ce qu'**il s'agit, pour le composant (A), de composés organosiliciés d'éléments de formule générale (I), dans laquelle R signifie un radical méthyle et R¹ signifie un radical hydrocarboné linéaire et/ou ramifié comprenant au moins 6 atomes de carbone, b vaut en moyenne 0,005 à 0,5 et la somme (a+b) vaut en moyenne 1,9 à 2,1.

6. Compositions selon l'une ou plusieurs des revendications 1 à 5, **caractérisées**
**en ce qu'**il s'agit de compositions qui sont constituées par
(A) au moins un organopolysiloxane d'unités de formule (I),
(B) 0,1 à 30 parties en poids, par rapport à 100 parties en poids de (A), d'au moins un additif, choisi parmi
(B1) des particules de charge et/ou
(B2) une résine organopolysiloxane d'unités de formule (II),
(C) 0,005 à 1,0 partie en poids, par rapport à 100 parties en poids de (A), d'eau
le cas échéant
(D) d'autres substances.

7. Procédé pour la préparation des compositions selon l'une ou plusieurs des revendications 1 à 6,
**caractérisé**
**en ce que** les composants (A), (B) et (C) ainsi que le cas échéant (D) sont mélangés les uns avec les autres et chauffés à 50 jusqu'à 300°C.

8. Procédé selon la revendication 7, **caractérisé en ce que** le mélange est réalisé à des températures de 10 à 300°C.

9. Procédé pour enlever la mousse et/ou pour empêcher la mousse d'agents, **caractérisé**
**en ce que** les compositions selon l'une ou plusieurs des revendications 1 à 6 ou préparées selon la revendication 7 ou 8 sont mélangées avec l'agent.

10. Agent de lavage et de nettoyage contenant les compositions selon l'une ou plusieurs des revendications 1 à 6 ou préparées selon la revendication 7 ou 8.
